# EUROPEAN PATENT APPLICATION

(11) **EP 4 794 035 A1**
(43) Date of publication of application: **19.08.2026**
(21) Application number: 25158479.3
(22) Date of filing: 18.02.2025
(51) Int. Cl.: H01M 4/96, H01M 8/18

(54) **FLOW BATTERY CELL DESIGN**

(71) Applicant: VoltStorage GmbH, 80935 München (DE)
(72) Inventor: HEILAND, Felix, 82442 Altenau (DE); PEITHER, Michael, 81675 München (DE)
(74) Representative: Grünecker Patent- und Rechtsanwälte PartG mbB

(57) **Abstract**

The invention provides a half-flow cell for a flow cell of a redox flow battery, the half-flow cell comprising: a flat frame having a through-opening; two or more flat electrode elements separately arranged within the through-opening of the frame, the electrode elements configured to be porous for liquid electrolyte and electrically conducting, each electrode element having a convex quadrilateral form with two opposite long sides and two opposite short sides; a supply channel structure in the frame configured to supply liquid electrolyte to the electrode elements at one of the long sides of each electrode element; and a collection channel structure in the frame configured to collect liquid electrolyte that has flown through the electrode elements at the other one of the long sides of each electrode element.

## Description

### Field of the Invention

The invention relates to a half-flow cell for a flow cell of a redox flow battery, a corresponding flow cell and a redox flow battery having the flow cell.

### Prior Art

A redox flow battery consist of one tank comprising a first liquid electrolyte solution and a separate second tank comprising a second liquid electrolyte solution. In addition, there is a cell, comprising of two half cells that are divided by an ion conducting separator or membrane. The first half cell is configured to be traversed by the first electrolyte solution, whereas the second half cell is configured to be traversed by the second electrolyte solution. Both electrolytes are transferred to the half cells and back through pumps in their respective circulations.

As per state of the art, there are two types of flow battery cell designs: Flow-through and flow-by cell configurations.

The flow through configuration is the most popular one amongst flow battery manufacturers. In this configuration, the entire half-cell cavity (between the flat electrode plate, also known as the bipolar plate and the separator membrane) is filled with a highly porous and electrically conducting (inert) material (the actual electrode). In most cases this material is carbon based (or pure carbon/graphite) and in soft felt form, with half-cell cavity thicknesses ranging from 1-20 mm. When pumping the electrolyte through the cell, the vast majority of the pressure drop is occurring during the travel of the electrolyte through the cell (hydraulic permeability of the porous material), but since the electrolyte covers the large internal surface area of the porous electrode, the reaction per normalized surface area is rather low and thus the overpotential is lower (and thereby the voltaic efficiency of the battery is generally higher). In order to reduce the cell's electrical resistance even further, it is advantageous to create thin cells (shorter distance between the electrode plate and the separator), but in that case the hydraulic pressure drop at the same volumetric pumping rate is rising proportionally as well (reducing the overall system efficiency). Challenges arise additionally when using a flow through design with hybrid redox flow battery chemistries where plating reactions occur (e.g., all iron redox flow batteries, or zinc-bromine batteries). These challenges include potential flow blockage by plated solids, and uneven plating or even dendrite formation in the porous electrode.

On the other hand there is the flow-by configuration, adapted from the fuel cell industry. In this case the half cell also contains an electrode plate, a porous electrode material and a separator. But in this configuration there are channels incorporated into the electrode plate to allow the flow of the liquid electrolyte to pass by the electrode. The porous material is in most cases a very thin carbon based material, for instance, carbon paper or carbon cloth, that is pressed between the electrode plates with the channels and the cell separator. The hydraulic pressure drop for the liquid electrolyte travelling through the channels in the electrode plate is much lower than in comparison with a flow through cell design and the internal electrical cell resistance is also lower due to the short distance between the electrode plate and the separator/membrane. However, due to the relatively low surface contact of the electrolyte and the electrode (in this case the thin carbon paper sheet) a very high volumetric flow is required and the overpotentials can be higher (due to the limited reaction surface). Also, manufacturing electrode/bipolar plates with channels incorporated is around a magnitude more costly than plain/flat plates (due to the material and production techniques).

### Description of the Invention

It is the object of the present invention to overcome or alleviate at least some of the above-mentioned disadvantages.

This invention relates to the design of the half flow cells in order to reduce pump power significantly (and thus decrease system efficiency losses), optionally with thinner cells to reduce electrical resistance, which in turn also decreases cost by utilizing less materials.

The invention provides a reactor according to claim 1. Further developments are defined in the dependent claims.

Independent claim 1 relates to a half-flow cell for a flow cell of a redox flow battery, the half-flow cell comprising: a flat frame having a through-opening; two or more flat electrode elements separately arranged within the through-opening of the frame, the electrode elements configured to be porous for liquid electrolyte and electrically conducting, each electrode element having a convex quadrilateral form with two opposite long sides and two opposite short sides; a supply channel structure in the frame configured to supply liquid electrolyte to the electrode elements at one of the long sides of each electrode element; and a collection channel structure in the frame configured to collect liquid electrolyte that has flown through the electrode elements at the other one of the long sides of each electrode element.

For example, by splitting a single electrode (in a prior art flow cell) into two electrode elements in a direction parallel to the long side of the electrode, the dimension/length of the short side of each electrode element is reduced, in particular halved. This reduces the flow resistance across the electrode element in the direction parallel to the short sides, for example when the flow is provided between the two electrode elements, i.e. between the long sides of the two electrode elements, and collected on both opposite long sides. The area of the electrode, originally length times width W, i.e. LxW, remains the same for the two electrode elements, namely 2 x LxW/2.

The electrode elements are flat in that for each electrode element the thickness measured perpendicular to the both, the long and short sides (length and width) is smaller than the length of the long and the short sides. The length of the short side is smaller than the length of the long side.

In a development, a ratio of any one of the two long sides to any one of the two short sides is larger than 2. This further reduces the required pump power.

According to a further development, a ratio of each long side to each short side is 3 or larger than 3, or is 4 or larger than 4. This even further reduces the required pump power to obtain a desired flow rate of electrolyte solution through the half-flow cell.

A thickness of the electrode elements perpendicular to the length and width dimensions may be 1-20 mm, in particular 1-5 mm. The thickness of the electrode elements may be smaller than compared to the conventional design.

In a further development, the electrode elements comprise a carbon-based felt material.

In another development, the convex quadrilateral form is a parallelogram form or a rectangular form.

According to a further development, the supply channel structure comprises one or more supply channels. In particular, the supply channel structure may comprise two or more supply channels connected at a supply junction.

According to another development, the collection channel structure comprises one or more collection channels. In particular, the collection channel structure may comprise two or more collection channels connected at a collection junction.

In still another development, each electrode element has the form of a parallelogram, wherein, when in use, an angle *α* between a top/bottom side of the parallelogram and a horizontal line is *α* > 0°. This can be further developed in that the angle *α* may be in the range of 10° ≥ *α* ≥ 5°.

The invention further provides a flow cell of a redox flow battery, comprising two half-flow cells according to the invention or any one of the developments thereof, the two half-flow cells being separated by an ion conducting separator or membrane, wherein a first electrolyte is supplied to a first half-flow cell and a second electrolyte is supplied to a second half-flow cell.

The invention further provides a redox flow battery, in particular an iron redox flow battery, comprising a plurality of flow cells according to the invention, a first tank with the first electrolyte and a second tank with the second electrolyte.

According to a development of the (iron) redox flow battery the plurality of flow cells is arranged such that respective channels of the supply channel structure or of the collection channel structure that are located between the first and second electrode elements are oriented vertically.

In a further development of the (iron) redox flow battery, the supply channel structures of the first half-flow cells are interconnected and connected to a first piping configured for flowing first electrolyte from the first tank and the supply channel structures of the second half-flow cells are interconnected and connected to a second piping configured for flowing second electrolyte from the second tank. The first and second piping may each include one or more pipes.

In another development of the (iron) redox flow battery, the collection channel structures of the first half-flow cells are interconnected and connected to a third piping configured for flowing first electrolyte to the first tank and the collection channel structures of the second half-flow cells are interconnected and connected to a fourth piping configured for flowing second electrolyte to the second tank. The third and fourth piping may each include one or more pipes.

Further features and exemplary embodiments as well as advantages of the present invention will be explained in greater detail hereinafter with reference to the drawings. It is understood that the specific embodiments do not limit the present invention.

### Brief Description of the Drawing

- Fig. 1A: shows a state-of-the-art flow-through half-cell.
- Fig. 1B: shows a flow pattern in the half-cell of Fig. 1A.
- Fig. 2A: shows a conventional flow cell geometry.
- Fig. 2B: shows a modified conceptional flow cell geometry.
- Fig. 3: shows the geometry in an embodiment according to the invention.
- Fig. 4A: shows an embodiment of the half-cell according to the invention.
- Fig. 4B: shows a flow pattern in the half-cell of Fig. 4A.
- Fig. 5: shows a flow pattern in another embodiment.
- Fig. 6: shows another embodiment of a half-cell.
- Fig. 7: shows another embodiment having further electrode elements and different channel structures.
- Fig. 8: shows an embodiment having parallelogram type electrode elements.
- Fig. 9: shows an iron redox flow battery.

### Embodiments

The invention is described in detail for the following embodiments with respect to the accompanying drawings.

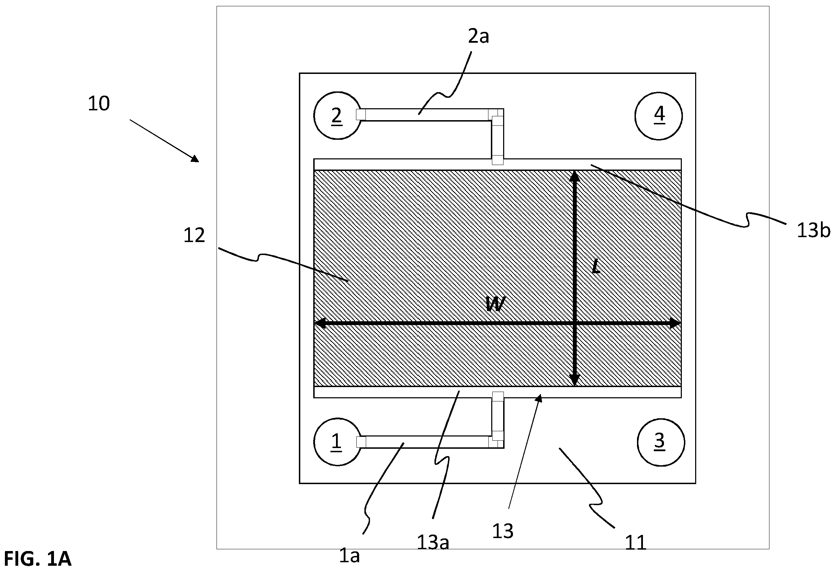

A state-of-the-art flow-through cell is depicted in Fig. 1A, in this case one of the half-cells 10. The half-cell comprises a frame 11. A common supply channel 1 (for this and potentially other cells in the same cell stack) supplies the respective half-cell cavity 13 through the channel 1a with the liquid electrolyte solution. The half-cell cavity 13 is mainly filled out by an electrode 12. This electrode 12 usually consists of a highly porous, highly (electrically) conductive and chemically inert material, to greatly enhance the electrode surface. In most cases this material is a carbon-based felt material. Normally, the half-cell cavity 13 is not filled 100% with the electrode 12, but some space at the inlet 13a and outlet 13b are left open and used to optimally distribute the liquid flow along the long side of the cell (along the width W direction). In the cavity space 13b at the other end of the electrode 12 the liquid electrolyte is then collected again and transported back to the tank through the channel 2a and the common collection channel 2. The same happens for the respective other side of the cell (the other half cell) through the common supply and collection channels (3 and 4).

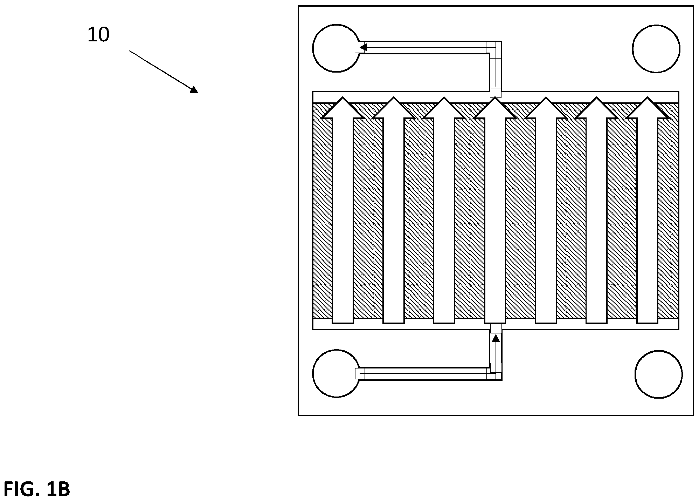

The flow diagram (Fig. 1B) depicts the liquid flow through this half-cell 10. The liquid has to travel through the whole length of the porous electrode (short side of the electrode) and in the process, the flow pressure drop - induced by the permeability of the porous electrode material - requires a lot of pumping power (pumping pressure to be exact to realize the volume flow). The pumping power is directly correlated with the total pressure drop of the flow through the half-cell. The relationship between the length of the travel through the porous electrode (height of the electrode), the thickness of the electrode, the length of the electrode (longer side of the electrode in this figure), the permeability of the porous electrode material and the resulting pressure drop can be expressed through the following formula (also known as Darcy's law): $Δ p = - \frac{Q ⋅ μ ⋅ L}{A ⋅ k}$ wherein $A = W ⋅ h$ and
Δ*p* is the overall pressure drop (in *Pa*)
*Q* is the flow rate (in $\frac{{m}^{3}}{s}$)
*µ* is the dynamic viscosity of the fluid (in $\frac{Pa}{s}$)
*k* is the permeability of the porous electrode (in *m*²)
*L* is the length of the path the liquid travels through the permeable electrode (in *m*)
*h* is the thickness of the porous electrode (in *m*)
*W* is the width of the porous electrode (in *m*).

In order to reduce the material usage, while retaining or even enhancing the internal electrical cell resistance/performance, the thickness of the porous electrode needs to be lowered. This however increases the overall hydraulic pressure drop according to the formula above. One way to counteract that effect, is to also lower the length of the liquid travel through the porous electrode and at the same time increasing the width (to keep the same "projected" electrode area). This relationship is also called aspect ratio and is defined as $r = \frac{W}{L}$ wherein
*r* is the aspect ratio
*L* is the length of the porous electrode (in *m*)
*W* is the width of the porous electrode (in *m*)

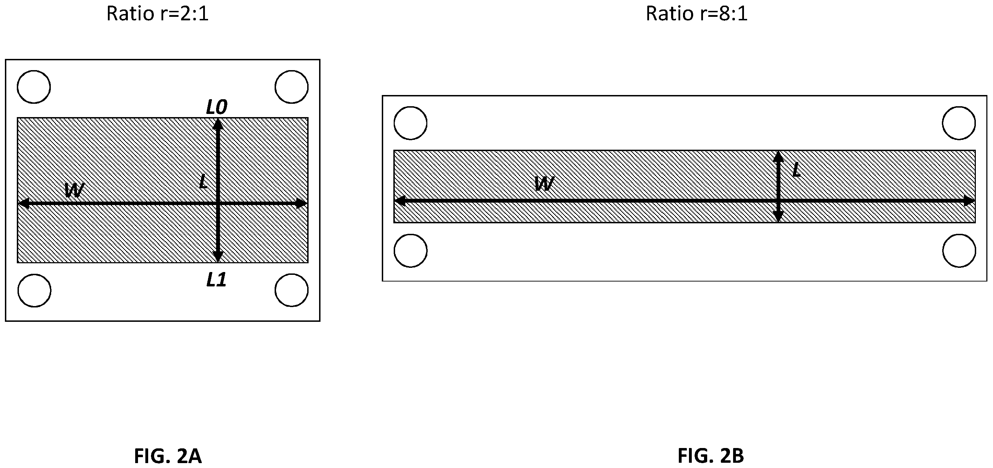

For example, starting with a practical usable aspect ratio of 2:1 and a thickness of 6 mm and converting that half-cell into a thickness of 3 mm (half the porous electrode material) would mean that the aspect ratio now has to be 4:1 to keep the same hydraulic pressure drop and thus the same pumping power. Halving the cell thickness again would mean an aspect ratio of 8:1 to retain the same pumping power (see Fig. 2A, 2B).

However, aspect ratios above 3:1-4:1 are very unpractical or even hard to realize. The problems mainly being the fluid distribution from one supply channel over the entire width of the electrode, the design, manufacturing, and material selection of such a long and thin part and in general the form factor of such a cell and/or cell-stack (see Fig. 2B)

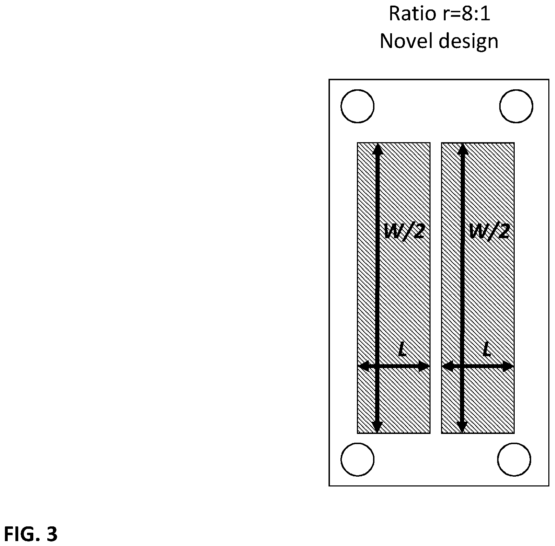

Fig. 3 shows the novel design for the half-cell. Instead of having a very wide electrode element with width W as in Fig. 2B, it is split into two electrode elements of equal size, each having a width W/2. However, since the half-cell is configured such the flow of electrolyte is still in the direction of the length L (for example by supplying the electrolyte in the space between the two electrode elements), the pressure drop remains the same.

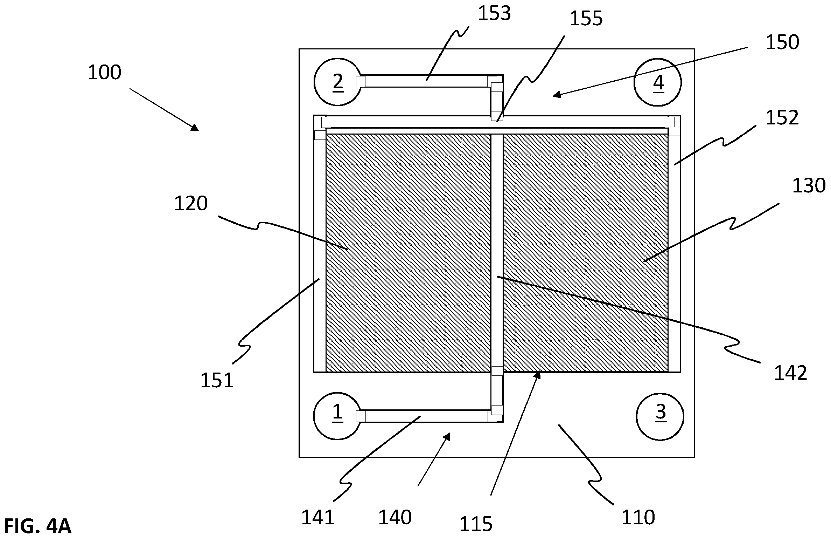

Fig. 4A shows an embodiment of the half-cell according to the invention.

The half-flow cell 100 for a flow cell of a redox flow battery comprises a flat frame 110 having a through-opening 115; two or more flat electrode elements 120, 130 separately arranged within the through-opening 115 of the frame 110. The electrode elements 120, 130 are configured to be porous for liquid electrolyte and electrically conducting, each electrode element 120, 130 having a convex quadrilateral form with two opposite long sides and two opposite short sides. A supply channel structure 140 in the frame 110 is configured to supply liquid electrolyte to the electrode elements 120, 130 at one of the long sides of each electrode element 120, 130, and a collection channel structure 150 in the frame 110 is configured to collect liquid electrolyte that has flown through the electrode elements 120, 130 at the other one of the long sides of each electrode element 120, 130.

Electrolyte is supplied from the common supply channel 1 and withdrawn in the common collection channel 2. The supply channel structure 140 comprises a supply channel 141, 142 to provide electrolyte into the space between the two electrode elements 120, 130. The collection channel structure 150 comprises a collection channel 151 on the long, outer side of the electrode element 120 and a collection channel 152 on the long, outer side of the other electrode element 130. Further, in a junction 155 both collection channels are united into a single collection channel 153 and the electrolyte that has passed through electrode element 120 and the electrolyte that has passed through electrode element 130 flows to the common collection channel 2.

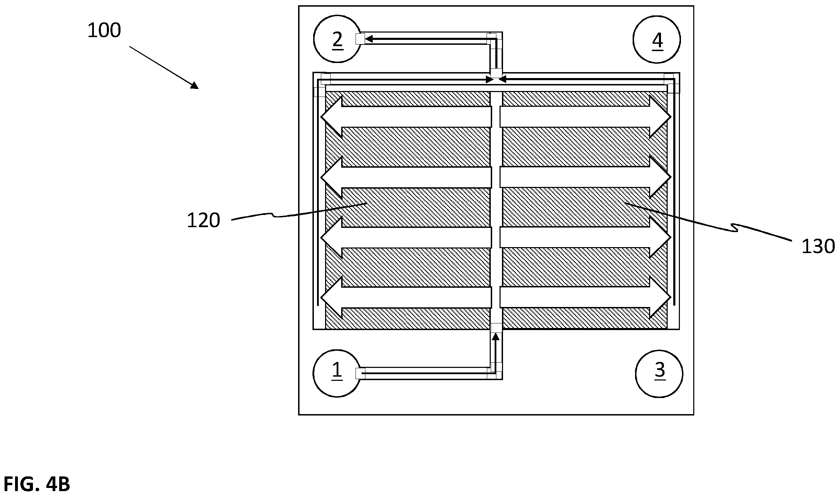

Fig. 4B shows a flow pattern in the half-cell 100 of Fig. 4A.

The supplied electrolyte distribute along the inner long sides of the electrode elements 120, 130 and flow through the electrode elements 120, 130 to the respective opposite outer long side.

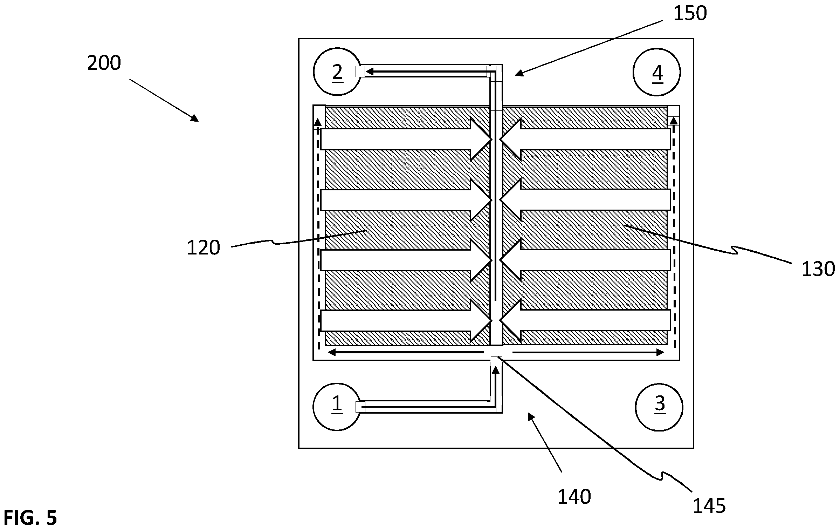

Fig. 5 shows a flow pattern in another embodiment.

In this embodiment of the half-flow cell 200, the flow direction in the electrode elements 120, 130 is reversed compared to the half-flow cell 100 of Fig. 4B. This is achieved by a supply channel structure 140 distributing the electrolyte at the outer long sides of the electrode elements 120, 130 and by a collection channel structure 150 collecting the electrolyte at the inner long sides of the electrode elements 120, 130.

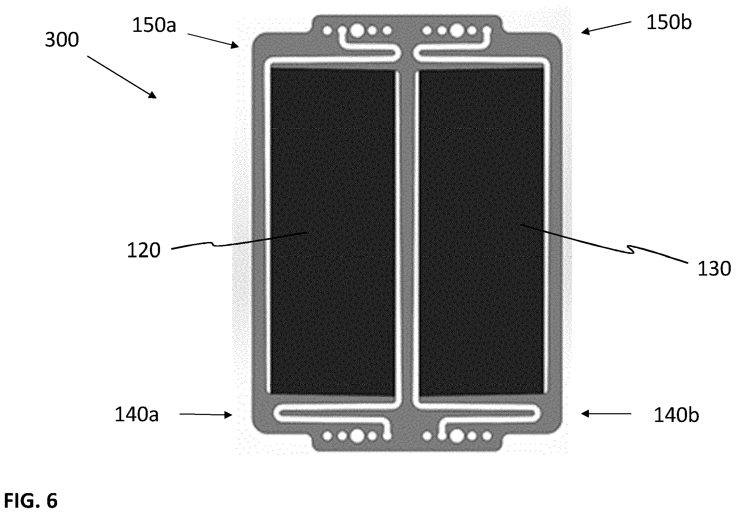

Fig. 6 shows another embodiment of a half-cell.

In this embodiment of the half-flow cell 300, the supply channel structure comprises separate supply channels 140a and 140b for each electrode element 120, 130, respectively. Further, the collection channel structure comprises separate collection channels 150a and 150b for each electrode element 120, 130, respectively.

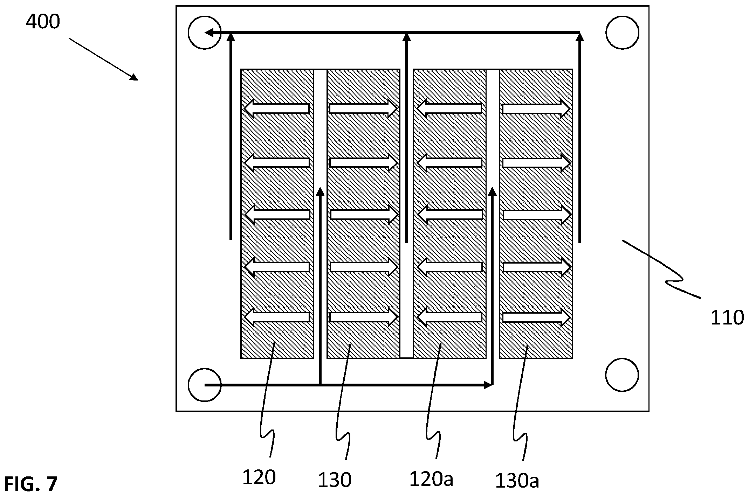

Fig. 7 shows another embodiment having further electrode elements and different channel structures.

In this embodiment of the half-flow cell 400, two further electrode elements 120a, 130a are included in the frame 110 and the electrolyte is supplied in the space between each pair of electrode elements 120, 130; 120a, 130a and collected in the middle between the two pairs of electrode elements as well as on the outside of each pair of electrode elements.

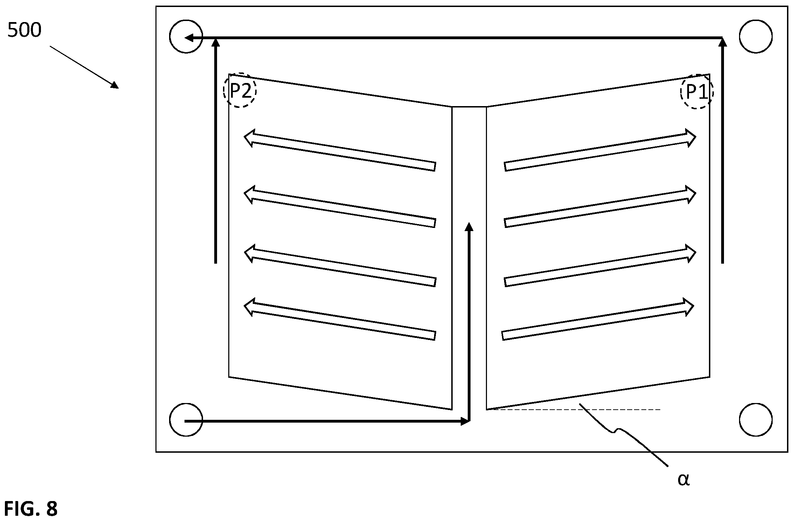

Fig. 8 shows an embodiment 500 having parallelogram type electrode elements.

Each electrode element has the form of a parallelogram, wherein an angle *α* between a top/bottom side of the parallelogram and a horizontal line is *α* > 0°. In particular, the angle *α* may be in the range of 10° ≥ *α* ≥ 5°. The highest point P1, P2 where gas may be accumulating is well determined and there are no gas traps possible.

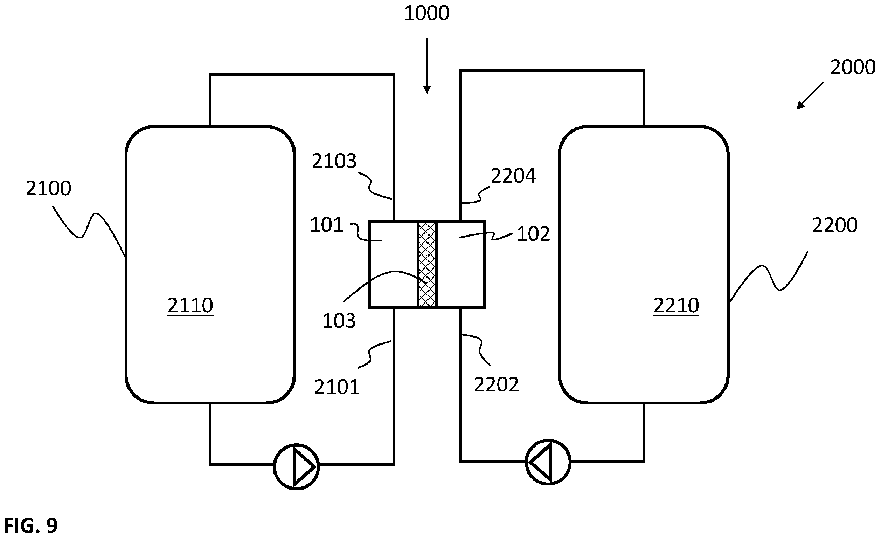

Fig. 9 shows a redox flow battery as an example of a flow battery that includes the half-flow cells as described above.

Specifically, the redox flow battery 2000 may be an iron redox flow battery 2000. The redox flow battery 2000 comprises a plurality of flow cells 1000 (only one flow cell is depicted), a first tank 2100 with the first electrolyte 2110 and a second tank 2200 with the second electrolyte 2210. The first electrolyte 2110 may be positive electrolyte and the second electrolyte 2210 may be negative electrolyte, or vice versa.

Each flow cell 1000 of the redox flow battery 2000 comprises two half-flow cells 101, 102 separated by an ion conducting separator 103 or membrane, wherein the first electrolyte 2110 is supplied to the first half-flow cell 101 and the second electrolyte 2210 is supplied to a second half-flow cell 102. The electrolytes are pumped through the respective half-cells 101, 102.

In the redox flow battery 2000 the supply channel structures of the first half-flow cells are interconnected and connected to at least one first piping 2101 configured for flowing first electrolyte from the first tank 2100 and the supply channel structures of the second half-flow cells are interconnected and connected to at least one second piping 2202 configured for flowing second electrolyte from the second tank 2200; and the collection channel structures of the first half-flow cells are interconnected and connected to at least one third piping 2103 configured for flowing first electrolyte to the first tank 2100 and the collection channel structures of the second half-flow cells are interconnected and connected to at least one fourth piping 2204 configured for flowing second electrolyte to the second tank 2200.

The invention is again summarized in the following:
The invention presents a way the cell can be designed and constructed, so that the cell itself stays compact but retains the same pressure drop, even though the cell thickness may be half that of a comparable cell with a conventional design and construction method.

Fig. 4A shows a half-cell 100 with this innovative design: The common supply 1, 3 and collection 3, 4 channels within the flow frame 110 stay in the same position and have the same function of supplying that specific half-cell with the respective liquid electrolyte solution. However, the channel 141 to supply the half cell 100 does not lead to an open space to distribute the flow to the entire electrode width. Instead, the half-cell cavity includes two porous electrodes, one on the left 120 and one on the right 130 with an open space 142 between them. This open space 142 has a comparable function as before and can be designed to distribute the flow equally over the entire width of both the two porous electrodes 120, 130. When the liquid electrolyte flows through the two porous electrodes 120, 130, it is collected in the end by the two respective collection channels 151, 152 and channeled together (junction 155) through channel 153 into the main collection channel/line 2 of the cell-stack.

The flow direction of the liquid electrolyte through the porous electrode and channels is depicted in Fig. 4B as well for a more comprehensive understanding.

In this particular case, also depicted in Fig. 4B, the half-cell cavity can have the same area and the porous electrode covers the same active area, but the hydraulic pressure drop is halved compared to the conventional design of such a flow cell (as shown in Fig. 4A). This is due to the fact, that the entire porous electrode in theory has a very high aspect ratio (e.g. 8:1) but is split in half on the long side to create the two porous electrodes with a practically usable aspect ratio (of e.g. 4:1 each). This means that, when using this novel design, either:
1. The pressure drop - und thus the pumping power - can be reduced by 75% while retaining the same porous electrode thickness.
2. The pressure drop stays the same while reducing the porous electrode/cell thickness by 75% (and thus saving 50% material on high-cost porous electrodes as well as doubling the power density due to space savings).
3. A combination of both advantages mentioned above, e.g. reducing the thickness (material usage/cost) by 50% as well as reducing pressure drop/pumping power by 50% in the same process.

Further advantages are visible when utilizing this cell design with "phase-change" redox couples in the liquid electrolytes, e.g. where the reduction/oxidation reaction changes the electroactive material's aggregate state. A good example is the Iron/Iron redox flow chemistry, where in the negative half-cell Iron(II) (liquid state) is reduced to lron(0) (solid state that is "plated" onto the electrode, so it remains as a solid layer in the half cell). The plating is directly linked to the local current at the specific location within the cell. The larger the travel path length L of the electrolyte through the cell, the higher the concentration and potential variation/gradient the electrolyte experiences from the entry location to the exit location of the cell. This influences the local plating current, resulting in a decreasing plating layer thickness from L0 to L1 (see Fig. 2A), leading to problems with the flow distribution, especially when the plate takes up a lot of space/is very thick. This is especially the case with battery topologies that plate for a very long time (24 hr and above). Reducing the length L by 50% also reduces the problems associated with the inconsistency of plating significantly.

In the case there are some gas evolution reactions involved in either the reduction/oxidation reaction of the electroactive material in the liquid electrolyte or through any other (parasitic) side reaction, this novel cell design can be adjusted to effectively evacuate gas (bubbles) from within the cell. Other than in the conventional design, where the highest point in the porous electrode material is equal since it is a straight cut - or even worse it gets trapped since the cell is not oriented exactly horizontally - the novel cell design can be adjusted that the highest point P1 and P2 (where the gas is accumulating) is well determined and there are no gas traps possible (as shown in Fig. 8). Therefore, the porous electrodes may be shaped as a parallelogram, with a top/bottom angle *α* > 0°, preferable in the range of 10° > *α* > 5° to allow gas bubbles to be pushed out by the liquid electrolyte flow but still retaining the compact overall design of the cell and travel length of the liquid electrolyte through the porous electrode (since that angle adds to the travel length of the liquid). For different types of gases, different angles can be utilized (depending on the molecular weight of these gases). This is especially important for all iron flow batteries using aqueous electrolyte, where thermodynamically some hydrogen generation is expected during the charging process.

The embodiments are only exemplary and the full scope of the present invention is defined by the claims.

## Claims

1. A half-flow cell (100-500) for a flow cell of a redox flow battery, the half-flow cell comprising:
a frame (110) having a through-opening (115);
two or more electrode elements (120, 130) separately arranged within the through-opening (115) of the frame (110), the electrode elements configured to be porous for liquid electrolyte and electrically conducting, each electrode element having a convex quadrilateral form with two opposite long sides and two opposite short sides;
a supply channel structure (140) in the frame (110) configured to supply liquid electrolyte to the electrode elements at one of the long sides of each electrode element; and
a collection channel structure (150) in the frame (110) configured to collect liquid electrolyte that has flown through the electrode elements at the other one of the long sides of each electrode element.

2. The half-flow cell according to claim 1, wherein a ratio of any one of the two long sides to any one of the two short sides is larger than 2, in particular wherein a ratio of each long side to each short side is 3 or larger than 3, or is 4 or larger than 4.

3. The half-flow cell according to claim 1 or 2, wherein a thickness of the electrode elements perpendicular to the long and short sides is 1-20 mm, in particular 1-5 mm.

4. The half-flow cell according to any one of claims 1 to 3, wherein the electrode elements comprise a carbon-based felt material.

5. The half-flow cell according to any one of claims 1 to 4, wherein the convex quadrilateral form is a parallelogram form or a rectangular form.

6. The half-flow cell according to any one of claims 1 to 5, wherein the supply channel structure (140) comprises one or more supply channels (141).

7. The half-flow cell according to claim 6, wherein the supply channel structure comprises two or more supply channels connected at a supply junction (145).

8. The half-flow cell according to any one of claims 1 to 7, wherein the collection channel structure (150) comprises one or more collection channels (151).

9. The half-flow cell according to claim 8, wherein the collection channel structure comprises two or more collection channels connected at a collection junction (155).

10. The half-flow cell according to any one of claims 1 to 9, wherein each electrode element has the form of a parallelogram, wherein, when in use, an angle *α* between a top/bottom side of the parallelogram and a horizontal line is *α* > 0°.

11. The half-flow cell according to claim 10, wherein the angle *α* is in the range of 10° ≥ *α* ≥ 5°.

12. A flow cell (1000) of a redox flow battery, comprising two half-flow cells (100-500) according to any one of claim 1 to 11, separated by an ion conducting separator (103) or membrane, wherein a first electrolyte is supplied to a first half-flow cell (101) and a second electrolyte is supplied to a second half-flow cell (102).

13. A redox flow battery (2000), in particular an iron redox flow battery (2000), comprising a plurality of flow cells (1000) according to claim 12, a first tank (2100) with the first electrolyte and a second tank (2200) with the second electrolyte.

14. The redox flow battery according to claim 13, wherein the plurality of flow cells (1000) is arranged such that respective channels (142) of the supply channel structure (140) or of the collection channel structure (150) between the first and second electrode elements (120, 130) are oriented vertically.

15. The redox flow battery according to claim 13 or 14, wherein:
the supply channel structures of the first half-flow cells are interconnected and connected to at least one first piping (2101) configured for flowing first electrolyte from the first tank and the supply channel structures of the second half-flow cells are interconnected and connected to at least one second piping (2202) configured for flowing second electrolyte from the second tank; and
the collection channel structures of the first half-flow cells are interconnected and connected to at least one third piping (2103) configured for flowing first electrolyte to the first tank and the collection channel structures of the second half-flow cells are interconnected and connected to at least one fourth piping (2204) configured for flowing second electrolyte to the second tank.
